**Europäisches Patentamt**

**European Patent Office**

**Office européen des brevets**

(11) Veröffentlichungsnummer: **0 328 866**

**A2**

## EUROPÄISCHE PATENTANMELDUNG

(21) Anmeldenummer: 89100362.6

(22) Anmeldetag: 11.01.89

(51) Int. Cl.⁴: **A01M 29/00**

(30) Priorität: 13.01.88 DE 3800716

(43) Veröffentlichungstag der Anmeldung:
23.08.89 Patentblatt 89/34

(84) Benannte Vertragsstaaten:
**AT BE CH DE ES FR GB GR IT LI LU NL SE**

(71) Anmelder: **Waldhoff, Jürgen**
**Gräffstrasse 22**
**D-6148 Heppenheim(DE)**

(72) Erfinder: **Waldhoff, Jürgen**
**Gräffstrasse 22**
**D-6148 Heppenheim(DE)**

(74) Vertreter: **Katscher, Helmut, Dipl.-Ing.**
**Bismarckstrasse 29**
**D-6100 Darmstadt(DE)**

(54) **Verfahren und Vorrichtung zum Vertreiben von Tauben.**

(57) An exponierten Kanten und/oder Flächen der gegen die Tauben zu schützenden Gebäuden, Denkmälern o.dgl. werden zwei elektrische Leitungsdrähte (2) im Abstand zueinander isoliert angebracht. Die Leitungsdrähte (2) werden durch einen Hochspannungs-Impulsgeber (8) mit elektrischen Impulsen hoher Spannung und geringer Stromstärke versorgt. Wenn sich eine Taube auf den Leitungsdrähten (2) niederläßt und diese dabei kurzschließt, wird sie durch einen elektrischen Hochspannungsstoß vertrieben.

FIG.1

EP 0 328 866 A2

## Verfahren und Vorrichtung zum Vertreiben von Tauben

Die Erfindung betrifft ein Verfahren zum Vertreiben von Tauben von Gebäuden, Denkmälern o.dgl., sowie Vorrichtungen zur Durchführung des Verfahrens.

Da sich Tauben in Großstädten sehr stark vermehrt haben und die von ihnen verursachte Verschmutzung von Gebäuden, Denkmälern o.dgl. oftmals unerträgliche Ausmaße angenommen haben, sind Maßnahmen erforderlich geworden, die durch die Tauben verursachten Verschmutzungen einzudämmen. Maßnahmen die auf die Vernichtung der Tauben oder deren Gelege gerichtet sind, stoßen einerseits aus Tierschutzgründen in der Öffentlichkeit auf Ablehnung; andererseits ist die Wirksamkeit solcher Maßnahmen zeitlich begrenzt.

Eine andere Möglichkeit des Schutzes gegen die Verschmutzung durch Tauben besteht darin, die Tauben wenigstens teilweise von den zu schützenden Bereichen fernzuhalten. Durch Drahtnetze versucht man, die Tauben von Teilen von Gebäuden fernzuhalten, die als bevorzugte Nistplätze oder Rastplätze dienen könnten. Einerseits können diese Maßnahmen nur an wenigen Stellen eines Gebäudes angewandt werden, insbesondere an Nischen oder zerklüfteten Teilen, andererseits sind die deutlich sichtbaren Drahtnetze aus ästhetischen Gründen unerwünscht. Vor allem die als Sitzplätze von Tauben besonders bevorzugten exponierten Kanten oder Flächen von Gebäuden oder Denkmälern können auf diese Weise nicht geschützt werden.

Aufgabe der Erfindung ist es daher, ein Verfahren der eingangs genannten Gattung zu schaffen, das es ermöglicht, Tauben gerade von den exponierten Kanten und/oder Flächen von Gebäuden, Denkmälern o.dgl. fernzuhalten, ohne daß dadurch das Aussehen wesentlich beeinträchtigt wird. Aufgabe der Erfindung ist es auch, Vorrichtungen zur Durchführung dieses Verfahrens anzugeben.

Diese Aufgabe wird erfindungsgemäß durch ein Verfahren zum Vertreiben von Tauben von Gebäuden, Denkmälern o.dgl. gelöst, das dadurch gekennzeichnet ist, daß zwischen einen an exponierten Kanten und/oder Flächen des Gebäudes, Denkmals o.dgl. isoliert angeordneten elektrischen Leitungsdraht und einen hierzu im Abstand von etwa 20 bis 30 mm angeordneten weiteren elektrischen Leiter eine elektrische Hochspannung bei geringer Stromstärke gelegt wird.

Es hat sich gezeigt, daß die Tauben sich bevorzugt an exponierten Kanten und/oder Flächen niederlassen. Dabei überbrücken die Tauben mit ihren Füßen den Abstand zwischen dem isoliert angeordneten Leitungsdraht und dem weiteren elektrischen Leiter, der ebenfalls ein elektrischer Leitungsdraht oder ein metallischer Teil des Gebäudes oder Denkmals sein kann. Die Tauben erhalten dadurch einen elektrischen Stromstoß von hoher Spannung, jedoch geringer Stromstärke, der ausreicht, die Tauben wirksam zu vertreiben, ohne sie jedoch zu verletzen oder zu töten. Auch wenn die Tauben diese Wirkung nur an einigen Stellen des Gebäudes oder Denkmals erfahren, nämlich an den unter Hochspannung stehenden Leitungsdrähten, werden sie innerhalb kurzer Zeit das gesamte Gebäude oder Denkmal meiden.

Die an den exponierten Stellen angebrachten Leitungsdrähte beeinträchtigen das ästhetische Erscheinungsbild des Gebäudes oder Denkmals nur sehr wenig und werden vom Betrachter über größere Entfernungen kaum wahrgenommen.

Insbesondere lassen sich mit dem erfindungsgemäßen Verfahren die exponierten Stellen schützen, beispielsweise Gesimse, Fensterbänke, hochragende Teile von Denkmälern usw., die durch Drahtgitter oder ähnliche bekannte Maßnahmen nicht geschützt werden können.

Eine erfindungsgemäße Vorrichtung zur Durchführung des Verfahrens ist dadurch gekennzeichnet, daß zwei steife Leitungsdrähte im Abstand von etwa 20 bis 30 mm nebeneinander an mehreren elektrisch isolierenden Abstandshaltern befestigt sind, die an exponierten Kanten und/oder Flächen des Gebäudes, Denkmals o.dgl. angebracht sind, und daß beide Leitungsdrähte mit den beiden Ausgangsklemmen eines Hochspannungsgenerators verbunden sind. Hierbei sind die beiden Leitungsdrähte so angeordnet, daß sie von den Füßen der Tauben überbrückt werden, wenn diese sich darauf niederlassen.

Wenn die Teile des Gebäudes oder Denkmals, an denen die Leitungsdrähte angebracht werden sollen, aber bereits aus Metall bestehen, beispielsweise mit Kupfer gedeckte Dachflächen oder aus Bronce bestehende Denkmäler, dann können diese Metallteile den zusätzlichen elektrischen Leiter bilden, so daß nur ein einzelner Leitungsdraht vorgesehen werden muß, der wiederum in dem geeigneten Abstand von 20 bis 30 mm hierzu isoliert angeordnet wird.

Weitere vorteilhafte Ausgestaltungen des Erfindungsgedankens sind Gegenstand weiterer Unteransprüche.

Die Erfindung wird nachfolgend an Ausführungsbeispielen näher erläutert, die in der Zeichnung dargestellt sind. Es zeigt:

Fig. 1 in stark vereinfachter Darstellungsweise einen Abschnitt von zwei an einem Gebäudeteil angebrachten Leitungsdrähten, die mit einem Hochspannungs-Impulsgeber verbunden sind, der nur als stark vereinfachtes Blockschaltbild dargestellt ist, und

Fig. 2 in einer Darstellung ähnlich der Fig. 1 eine Ausführungsform mit nur einem Leitungsdraht, der im Abstand zu einem Metallteil eines Gebäudes angeordnet ist.

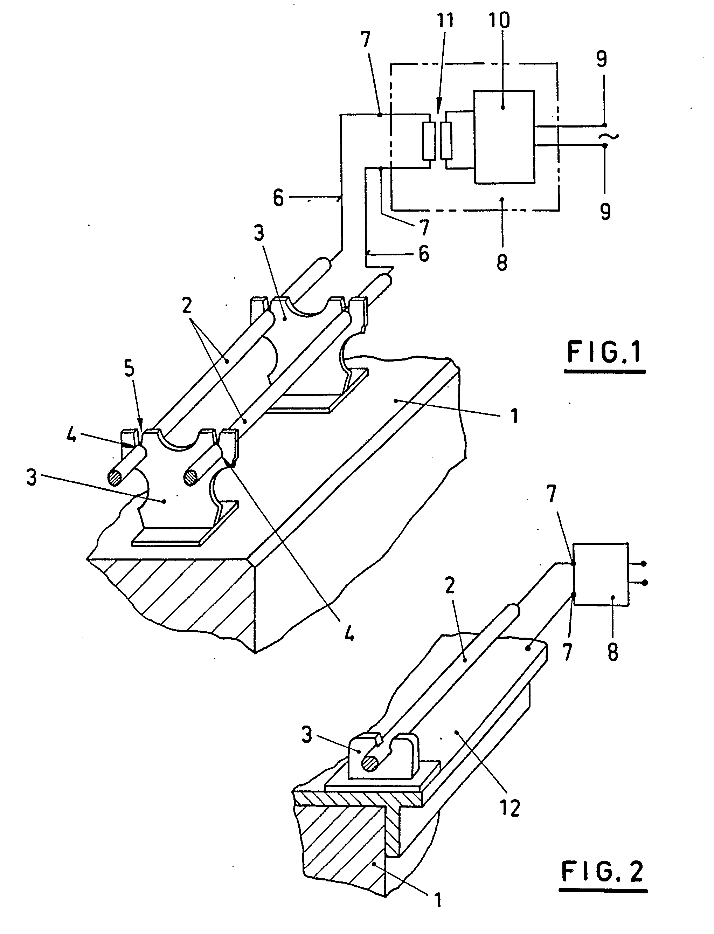

Wie in Fig. 1 dargestellt, sind an einem Gebäudeteil 1, beispielsweise einem Gesims, zwei steife Leitungsdrähte 2 in einem Abstand von etwa 20 bis 30 mm nebeneinander angeordnet. Die Leitungsdrähte 2 verlaufen vorzugsweise über alle Kanten und/oder Flächen des Gebäudes, von denen die Tauben ferngehalten werden sollen. Die Leitungsdrähte folgen dabei diesen exponierten Kanten oder Flächen des Gebäudes und sind erforderlichenfalls entsprechend abgewinkelt.

Zahlreiche jeweils im Abstand zueinander angeordnete Abstandshalter 3 tragen die Leitungsdrähte 2. Jeder Abstandshalter 3 ist aus klarsichtigem Kunststoff hergestellt. Hierfür wird vorzugsweise UV-beständiges Material verwendet, beispielsweise Acrylglas. Die Abstandshalter 3 sind mit der sie tragenden Fläche mit einem klaren, dauerelastischen Kleber verklebt.

Die beiden Leitungsdrähte 2, die aus Aluminium-Legierungsrundstangen von vorzugsweise 3 mm Durchmesser bestehen, sind beispielsweise aus der Aluminiumlegierung AlMgSi 1 nach DIN 1725 hergestellt. Die Leitungsdrähte 2 sind so steif und die Abstände der Abstandshalter 3 sind so gewählt, daß sich die Leitungsdrähte 2 auch unter dem Gewicht der sich darauf niederlassenden Tauben nicht wesentlich durchbiegen.

Die Abstandshalter 3 weisen zwei Halteöffnungen 4 auf, die jeweils mit einem nach außen geöffneten Einschnitt 5 versehen sind. Durch diesen Einschnitt 5 können die Leitungsdrähte 2 unter elastischer Verformung des Abstandshalters 3 bei der Montage in einfacher Weise eingerastet werden, so daß sonstige Befestigungsmaßnahmen überflüssig sind.

Die beiden Leitungsdrähte 2 sind über Leitungen 6 an die Ausgangsklemmen 7 eines elektrischen Hochspannungs-Impulsgebers 8 angeschlossen. An den Eingangsklemmen 9 des Impulsgebers 8 wird zur Energieversorgung Wechselstrom von 220 V angelegt. In einer vereinfacht nur als Block dargestellten Schaltung 10 des Impulsgebers 8 werden intermittierend Wechselstromimpulse erzeugt und an die Primärseite eines Transformators 11 gegeben, dessen Sekundärseite mit den Ausgangsklemmen 7 verbunden ist. Im Tranformator 11 werden die elektrischen Impulse in Hochspannungsimpulse von 5000 bis 10000 V Leerlaufspannung bei einem Leerlaufstrom von 0,01 bis 0,04 A umgewandelt. Vorzugsweise wird eine Leerlaufspannung von 7000 bei 0,02 A erzeugt. Bei der Berührung durch eine Taube beträgt die Spannung je nach Länge der Leitungsdrähte 2 bis zu 4000 V. Die Ladeenergie beträgt etwa 1,6 J. Die Leistungsaufnahme des Hochspannungs-Impulsgebers 8 beträgt etwa 3,5 W.

Fig. 2 zeigt in vereinfachter Darstellungsweise eine abgewandelte Ausführungsform, die sich von der Ausführungsform nach Fig. 1 im wesentlichen dadurch unterscheidet, daß nur ein einziger Leitungsdraht 2 vorhanden ist, der in der schon beschriebenen Weise durch Abstandshalter 3 an einem Gebäudeteil 12 befestigt ist, das hierbei jedoch ein elektrisch leitfähiges Metallteil ist, beispielsweise eine Metallschiene an einem Gesims 1. Hierbei bildet das Metallteil 12 einen weiteren elektrischen Leiter, der mit einem der beiden Ausgangsklemmen 7 des Hochspannungs-Impulsgebers 8 verbunden ist. Die andere Ausgangsklemme 7 ist mit dem Leitungsdraht 2 verbunden. Eine Taube, die sich auf dem Leitungsdraht 2 niederläßt, überbrückt mit ihren Füßen den Abstand von etwa 20 bis 30 mm zum Metallteil 12.

## Ansprüche

1. Verfahren zum Vertreiben von Tauben von Gebäuden, Denkmälern o.dgl., dadurch gekennzeichnet, daß zwischen einen an exponierten Kanten und/oder Flächen des Gebäudes, Denkmals o.dgl. isoliert angeordneten elektrischen Leitungsdraht und einen hierzu im Abstand von etwa 20 bis 30 mm angeordneten weiteren elektrischen Leiter eine elektrische Hochspannung bei geringer Stromstärke gelegt wird.

2. Verfahren nach Anspruch 1, dadurch gekennzeichnet, daß die elektrische Hochspannung eine Wechselspannung von 5000 bis 10000 V Leerlaufspannung bei 0,01 bis 0,04 A Leerlaufstrom ist.

3. Verfahren nach Anspruch 1 oder 2, dadurch gekennzeichnet, daß die Hochspannung intermittierend angelegt wird.

4. Vorrichtung zur Durchführung des Verfahrens nach einem der Ansprüche 1 bis 3, dadurch gekennzeichnet, daß zwei steife Leitungsdrähte (2) im Abstand von etwa 20 bis 30 mm nebeneinander an mehreren elektrisch isolierenden Abstandshaltern (3) befestigt sind, die an exponierten Kanten und/oder Flächen des Gebäudes, Denkmals o.dgl. angebracht sind, und daß beide Leitungsdrähte (2) mit den beiden Ausgangsklemmen (7) eines Hochspannungsgenerators (8) verbunden sind.

5. Vorrichtung zur Durchführung des Verfahrens nach einem der Ansprüche 1 bis 3, dadurch gekennzeichnet, daß ein steifer Leitungsdraht (2) an mehreren elektrisch isolierenden Abstandshaltern (3) im Abstand von etwa 20 bis 30 mm zu einem einen weiteren elektrischen Leiter bildenden Metallteil (12) an exponierten Kanten und/oder Flächen des Gebäudes, Denkmals o.dgl. angebracht ist, und daß der Leitungsdraht (2) und das Metallteil (12) mit jeweils einer der beiden Ausgangsklemmen (7) eines Hochspannungsgenerators verbunden sind.

6. Vorrichtung nach Anspruch 4 oder 5, dadurch gekennzeichnet, daß der Hochspannungsgenerator ein Hochspannungs-Impulsgeber (8) ist.

7. Vorrichtung nach Anspruch 4 oder 5, dadurch gekennzeichnet, daß die Abstandshalter (3) aus klarsichtigem Kunststoff bestehen.

8. Vorrichtung nach Anspruch 4 oder 5, dadurch gekennzeichnet, daß die Abstandshalter (3) mit der sie tragenden Fläche verklebt sind.

9. Vorrichtung nach Anspruch 4 oder 5, dadurch gekennzeichnet, daß die Abstandshalter (3) mindestens eine Halteöffnung (4) aufweisen, in die der Leitungsdraht (2) unter elastischer Verformung des Abstandshalters (3) einrastbar ist.

10. Vorrichtung nach Anspruch 4 oder 5, dadurch gekennzeichnet, daß der Leitungsdraht (2) aus einer Aluminiumlegierung besteht und einen Durchmesser von etwa 2,5 bis 3,5 mm hat.

EP 0 328 866 A2

FIG.1

FIG.2